# EUROPÄISCHE PATENTSCHRIFT

(11) **EP 4 037 284 B1**
(45) Veröffentlichungstag und Bekanntmachung des Hinweises auf die Patenterteilung: **01.04.2026**
(21) Anmeldenummer: 21154661.9
(22) Anmeldetag: 02.02.2021
(51) Int. Cl.: H04L 67/00, G06F 21/57, H04L 67/12

(54) **VERFAHREN, VORRICHTUNGEN UND COMPUTERPROGRAMMPRODUKT ZUM AUSFÜHREN EINER SOFTWARE AUF EINEM RECHNER FÜR EINE STEUERUNG EINES TECHNISCHEN SYSTEMS, INSBESONDERE EINES SYSTEMS ZUR BAHNSTEUERUNG**
METHODS, APPARATUSES AND COMPUTER PROGRAMM PRODUCT FOR RUNNING SOFTWARE ON A COMPUTER FOR CONTROLLING A TECHNICAL SYSTEM, IN PARTICULAR A SYSTEM FOR RAILWAY CONTROL SYSTEM
PROCÉDÉS, APPAREILS ET PRODUIT-PROGRAMME D'ORDINATEUR MISE EN OEUVRE PAR ORDINATEUR PERMETTANT D'EXÉCUTER UN LOGICIEL SUR UN ORDINATEUR POUR UNE COMMANDE D'UN SYSTÈME TECHNIQUE, EN PARTICULIER POUR UN SYSTÈME DE COMMANDE DE SIGNAUX FERROVIAIRES

(43) Veröffentlichungstag der Anmeldung: 03.08.2022
(73) Patentinhaber: Siemens Mobility GmbH, 80997 München (DE)
(72) Erfinder: Hahn, Stefan-Wolfgang, 38302 Wolfenbüttel (DE); König, Martin, 38106 Braunschweig (DE); Rahn, Karsten, 38162 Cremlingen (DE)
(74) Vertreter: Siemens Patent Attorneys

(56) Entgegenhaltungen:
- EP-A1- 0 679 977
- DE-A1- 3 735 682
- US-A1- 2005 005 098
- US-A1- 2008 319 779

## Beschreibung

Die vorliegende Erfindung betrifft ein computerimplementiertes Verfahren zum Ausführen einer Software auf einem Rechner für eine Steuerung eines technischen Systems, insbesondere für eine Bahnsteuerung. Ferner betrifft die Erfindung einen Rechner für eine Steuerung eines technischen Systems, ein computerimplementiertes Verfahren zum Generieren eines Anlaufsiegels zum Entschlüsseln zumindest eines verschlüsselten Teils einer Software und einen Rechner zum Ausführen dieses Verfahrens.

Bei sicherheitskritischen Systemen muss im Rahmen von Software Updates für sichere Rechner aus der Ferne sichergestellt werden, dass eine korrekte Version einer Software auf einem korrekten Rechner installiert wird. Solange die genannten Prüfungen nicht durchgeführt wurden bzw. nicht erfolgreich waren, darf eine neu geladene Software im System sicherungstechnisch nicht aktiv werden. Solange diese Prüfung nicht durchgeführt wurde bzw. nicht erfolgreich war, muss sichergestellt sein, dass sich der sichere Rechner im sicheren Zustand befindet. Das heißt, der sichere Rechner darf in diesem Zustand keine sicherheitsrelevanten Ausgänge bedienen bzw. keine sichere Kommunikation durchführen.

Sicherzustellen, dass sich ein sicherer Rechner auch im Fehlerfall, beispielsweise nach dem Laden einer inkorrekten Software, im sicheren Zustand befindet, ist eine Herausforderung. Aus dem Stand der Technik ist für ein Softwareupdate aus der Ferne bisher kein generisches Verfahren bekannt.

EP 0 679 977 Al beschreibt ein Verfahren und eine Vorrichtung zum Übertragen verschlüsselter Dateien von einem Quellcomputer zu einem oder mehreren Zielcomputern bereitgestellt. Auf dem Quellcomputer ist ein Exportprogramm und auf dem Zielcomputer ein Importprogramm bereitgestellt. Das Exportprogramm entschlüsselt die verschlüsselte Datei und kennzeichnet die Exportoperation mit einem Exportzählerwert. Die Klartextdatei wird dann mit einer Verschlüsselungsoperation verschlüsselt.

Eine Aufgabe der vorliegenden Erfindung besteht darin, ein verbessertes Verfahren zum Ausführen einer Software auf einem Rechner für eine Steuerung eines technischen Systems anzugeben, welches die oben genannten Herausforderungen umsetzen kann. Diese Aufgabe wird durch ein Verfahren zum Ausführen einer Software auf einem Rechner für eine Steuerung eines technischen Systems mit den Merkmalen des unabhängigen Anspruchs 1 gelöst. Weitere Aufgaben der vorliegenden Erfindung bestehen darin, einen Rechner für eine Steuerung eines technischen Systems bereitzustellen, ein computerimplementiertes Verfahren zum Generieren eines Anlaufsiegels zum Entschlüsseln zumindest eines verschlüsselten Teils einer Software anzugeben und einen Rechner zum Ausführen des Verfahrens zum Generieren eines Anlaufsiegels bereitzustellen. Diese Aufgaben werden jeweils durch die Gegenstände der unabhängigen Ansprüche 9, 14 und 15 gelöst. Vorteilhafte Weiterbildungen sind jeweils in abhängigen Ansprüchen angegeben.

Ein computerimplementiertes Verfahren zum Ausführen einer Software auf einem Rechner für eine Steuerung eines technischen Systems, insbesondere für eine Bahnsteuerung, umfasst erfindungsgemäß folgende Verfahrensschritte. Es wird ein Anlaufsiegel verwendet. Das Anlaufsiegel umfasst einen verknüpften Wert aus Werten eines Schlüssels und einer softwarespezifischen Identifikationsnummer und einer rechnerspezifischen Identifikationsnummer (der Begriff Identifikationsnummer soll im weitesten Sinne verstanden werden, wobei diese nicht aus einer Zahl bestehen muss, also als Identifikationscode verstanden werden soll). Der Schlüssel des Anlaufsiegels wird durch Verwenden einer softwarespezifischen Identifikationsnummer einer auf dem Rechner hinterlegten Software und einer auf dem Rechner hinterlegten rechnerspezifischen Identifikationsnummer extrahiert (insbesondere durch Vergleichen der Identifikationsnummern, also der softwarespezifischen Identifikationsnummern und der rechnerspezifischen Identifikationsnummern, jeweils vom Anlaufsiegel und vom Rechner, wobei die softwarespezifischen Identifikationsnummern und der rechnerspezifischen Identifikationsnummern übereinstimmen müssen, damit eine Extraktion stattfinden kann). Zumindest ein verschlüsselter Teil der Software wird auf Basis des extrahierten Schlüssels entschlüsselt. Der entschlüsselte Teil der Software wird für eine Steuerung des technischen Systems benutzt.

Vorteilhafterweise wird durch das Verfahren sichergestellt, dass der Rechner und das technische System nach dem Hinterlegen der Software auf dem Rechner ohne zusätzliche Informationen zur Entschlüsselung des Teils der Software in einem sicheren Zustand verbleiben, solange das Entschlüsseln nicht erfolgreich durchgeführt wurde. Erst durch die Bereitstellung des Anlaufsiegels, das die notwendigen Informationen zur Entschlüsselung enthält, erfolgt eine Freigabe der Software für einen Betrieb des technischen Systems. Die Software auf dem Rechner kann nur aktiv am Betrieb des technischen Systems teilnehmen, wenn im Rechner der Schlüssel des Anlaufsiegels vorliegt.

Der Schlüssel liegt dabei zunächst chiffriert im Anlaufsiegel vor. Ein Wert des Schlüssels bildet zusammen mit Werten der softwarespezifischen Identifikationsnummer und einer rechnerspezifischen Identifikationsnummer einen verknüpften Wert. Um den Schlüssel extrahieren zu können, ist die rechnerspezifische Identifikationsnummer auf dem Rechner hinterlegt. Der Rechner hat auch Zugriff auf die softwarespezifische Identifikationsnummer der Software, da die Software auf dem Rechner hinterlegt ist. Auf Basis der dem Rechner zugänglichen softwarespezifischen Identifikationsnummer und der rechnerspezifischen Identifikationsnummer wird der Schlüssel extrahiert. Dies gelingt nur, wenn die softwarespezifische Identifikationsnummer und die rechnerspezifische Identifikationsnummer des Anlaufsiegels mit der auf dem Rechner hinterlegten softwarespezifischen Identifikationsnummer und der auf dem Rechner hinterlegten rechnerspezifischen Identifikationsnummer übereinstimmt.

Wird lediglich die softwarespezifische Identifikationsnummer verwendet, wird dadurch sichergestellt, dass eine korrekte Softwareversion verwendet wird. Wird lediglich die rechnerspezifische Identifikationsnummer verwendet, wird dadurch sichergestellt, dass die Software auf dem korrekten Zielrechner verwendet wird. Werden im Rahmen des Verfahrens beide Identifikationsnummern verwendet, wird dadurch sichergestellt, dass eine korrekte Softwareversion auf einem korrekten Zielrechner verwendet wird. Das Verfahren ist dabei unabhängig von der spezifischen Ausprägung der Rechnerplattform konzipiert.

In einer Ausführungsform umfasst der verschlüsselte Teil der Software zumindest jene Bestandteile der Software, die zur Steuerung des technischen Systems für einen Zugriff auf zumindest einen Ausgang und/oder zumindest eine Kommunikationsschnittstelle des Rechners mit dem technischen System vorgesehen sind.

Vorteilhafterweise kann dadurch sichergestellt werden, dass der Rechner das technischen Systems lediglich dann ansteuern kann, wenn das Entschlüsseln erfolgreich war, da die für einen Zugriff auf den zumindest einen Ausgang und/oder die zumindest eine Kommunikationsschnittstelle des Rechners mit dem technischen System vorgesehenen Bestandteile der Software ansonsten nicht lauffähig sind. Dadurch können sicherheitskritische technische Systeme zuverlässig und sicher angesteuert werden, da sichergestellt ist, dass die korrekte Software und der korrekte Rechner zum Ansteuern des technischen Systems verwendet werden. Damit kann sichergestellt werden, dass der Rechner nur bei korrekter Entschlüsselung sicherheitsrelevante Ausgänge bedienen bzw. eine sicherheitsrelevante Kommunikation mit dem technischen System durchführen kann.

Vorteilhafterweise machen die für den Zugriff auf sicherheitsrelevante Ausgänge und/oder sicherheitsrelevante Kommunikationsschnittstellen vorgesehenen Teile der Software nur einen kleinen Bruchteil der Software aus. Dadurch kann das Verfahren besonders performant sein und durch den sicheren Rechner ohne Einschränkungen ausgeführt werden. Der Umfang der zu verschlüsselnden Teile der Software ist skalierbar und kann vorteilhafterweise über ein sicherheitskritisches Minimum hinaus erweitert werden, wobei auch damit zusätzlich eingeschlossenen Funktionalitäten erst nach dem Entschlüsseln verfügbar sind.

In einer Ausführungsform weist das Anlaufsiegel zusätzlich eine Vorschrift auf. Das Entschlüsseln erfolgt auf Basis des extrahierten Schlüssels und der Vorschrift. Die Vorschrift stellt damit eine inverse Operation zu einer Operation dar, die zum Verschlüsseln des Teils der Software verwendet wurde.

In einer Ausführungsform wird, wenn das Entschlüsseln nicht erfolgreich war, ein gültiges Anlaufsiegel angefragt.

In einer Ausführungsform wird geprüft, ob ein Softwareupdate verfügbar ist, und, wenn kein Softwareupdate verfügbar ist, das Anlaufsiegel für die auf dem Rechner hinterlegte Software angefragt. Vorteilhafterweise kann durch das Prüfen, ob ein Softwareupdate verfügbar ist, sichergestellt werden, dass kein Anlaufsiegel für eine veraltete Softwareversion angefragt und verwendet wird.

In einer Ausführungsform wird geprüft, ob ein Softwareupdate verfügbar ist, wobei, wenn ein Softwareupdate verfügbar ist, das Softwareupdate vom Rechner empfangen und auf dem Rechner installiert wird. Es wird ein Anlaufsiegel für das Softwareupdate angefragt. Vorteilhafterweise wird dadurch eine aktuelle Softwareversion und ein aktuelles Anlaufsiegel verwendet.

In einer Ausführungsform wird das Verfahren nach jedem Start oder Neustart des Rechners durchgeführt. Dadurch verbleibt der Rechner und das technische System vorteilhafterweise nach jedem Start oder Neustart des Rechners in einem sicheren Zustand, bis das Entschlüsseln erfolgreich durchgeführt werden kann.

Ein Computerprogrammprodukt umfasst Befehle, die bei der Ausführung durch den Rechner diesen dazu veranlassen, das Verfahren gemäß einer der Ausführungsformen auszuführen.

Ein Rechner zur Steuerung eines technischen Systems, insbesondere einer Bahnsteuerung, ist dazu ausgebildet, ein Anlaufsiegel zu empfangen. Das Anlaufsiegel umfasst einen verknüpften Wert aus Werten eines Schlüssels und einer softwarespezifischen Identifikationsnummer und einer rechnerspezifischen Identifikationsnummer. Der Rechner ist dazu ausgebildet, den Schlüssel durch Verwenden einer softwarespezifischen Identifikationsnummer einer auf dem Rechner hinterlegten Software und einer auf dem Rechner hinterlegten rechnerspezifischen Identifikationsnummer aus dem verknüpften Wert des Anlaufsiegels zu extrahieren und zumindest einen verschlüsselten Teil der Software auf Basis des extrahierten Schlüssels zu entschlüsseln. Der Rechner ist dazu ausgebildet, den entschlüsselten Teil der Software für eine Steuerung des technischen Systems auszuführen, wenn das Entschlüsseln erfolgreich war.

In einer Ausführungsform umfasst der verschlüsselte Teil der Software zumindest jene Bestandteile der Software, die zur Steuerung des technischen Systems für einen Zugriff auf zumindest einen Ausgang und/oder zumindest eine Kommunikationsschnittstelle des Rechners mit dem technischen System vorgesehen sind.

In einer Ausführungsform sind die für einen Zugriff auf zumindest einen Ausgang und/oder zumindest eine Kommunikationsschnittstelle des Rechners mit dem technischen System vorgesehenen Bestandteile der Software separat von anderen Bestandteilen der Software auf dem Rechner hinterlegt.

In einer Ausführungsform ist der Rechner dazu ausgebildet, eine Funktion eines Schienenfahrzeuges auf Basis des freigegebenen Teils der Software zu steuern. Hierbei kann es sich beispielsweise um eine Bremse oder einen Türschließmechanismus des Schienenfahrzeugs handeln. Erst, wenn eine korrekte Software und ein korrekter Rechner verwendet werden, kann eine solche Funktion gesteuert werden. Vorteilhafterweise kann dadurch sichergestellt werden, dass der Rechner und das technische System in einem sicheren Zustand verbleiben, solange das Entschlüsseln nicht erfolgreich war.

In einer Ausführungsform ist der Rechner dazu ausgebildet, eine Signalanlage für Schienenfahrzeuge und/oder ein Weiche zu steuern. Das Verfahren ist also vorteilhafterweise nicht auf schienenfahrzeugseitige Funktionen beschränkt, sondern kann auch für streckenseitige Funktionen verwendet werden.

Ein computerimplementiertes Verfahren zum Generieren eines Anlaufsiegels zum Entschlüsseln zumindest eines verschlüsselten Teils einer Software umfasst folgende Verfahrensschritte. Es wird ein verknüpfter Wert aus Werten eines Schlüssels und einer softwarespezifischen Identifikationsnummer einer Software und einer rechnerspezifischen Identifikationsnummer als ein Bestandteil des Anlaufsiegels erstellt. Der Schlüssel ist zum Entschlüsseln des zumindest einen verschlüsselten Teils der Software vorgesehen.

Ein weiterer Rechner umfasst Mittel zur Ausführung des Verfahrens zum Generieren eines Anlaufsiegels und Mittel zur Ausgabe des Anlaufsiegels an den Rechner gemäß einer der Ausführungsformen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
FIG 1: ein Schienenfahrzeug im Bereich einer Weiche;
FIG 2: einen Rechner zur Steuerung eines technischen Systems;
FIG 3: einen weiteren Rechner zum Generieren und Ausgeben eines Anlaufsiegels;
FIG 4: ein Verfahren zum Ausführen einer Software auf dem Rechner für eine Steuerung des technischen Systems; und
FIG 5: ein Computerprogrammprodukt zum Durchführen des Verfahrens auf dem Rechner.

Ein computerimplementiertes Verfahren 20 zum Ausführen einer Software auf einem Rechner 4 für eine Steuerung eines technischen Systems beruht auf der Idee, dass sichergestellt werden soll, dass der Rechner 4 und das technische System nach dem Hinterlegen der Software auf dem Rechner 4 ohne zusätzliche Informationen zur Entschlüsselung des Teils der Software in einem sicheren Zustand verbleiben, solange das Entschlüsseln nicht erfolgreich durchgeführt wurde.

Der Rechner ist für eine Steuerung eines technischen Systems vorgesehen. Bei dem technischen System kann es sich beispielsweise um eine Bahnsteuerung handeln. Das technische System ist jedoch nicht auf eine Bahnsteuerung beschränkt. Vielmehr kann es sich um ein beliebiges technisches System handeln, insbesondere ein System, bei dem sicherheitskritische Funktionen ausgeführt werden sollen. Lediglich beispielhaft werden in der nachfolgenden Beschreibung Bahnsteuerungselemente als Elemente einer Bahnsteuerung zur Erläuterung des Verfahrens 20 verwendet.

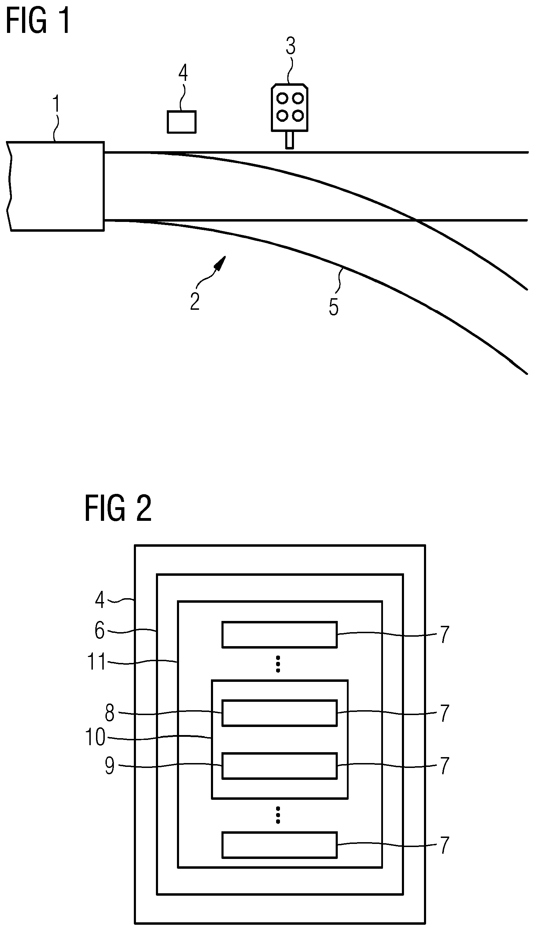

FIG 1 zeigt schematisch ein beispielhaftes Szenario, bei dem sich ein Schienenfahrzeug 1 im Bereich einer Weiche 2 und im Bereich einer Signalanlage 3 befindet. Ein Rechner 4 ist beispielhaft im Bereich von Schienen 5 angeordnet. Alternativ kann der Rechner 4 auch innerhalb des Schienenfahrzeugs 1 angeordnet sein. Der Rechner 4 kann beispielsweise dazu ausgebildet sein, eine Funktion des Schienenfahrzeuges 1 zu steuern. Dabei kann es sich beispielsweise um eine Bremse handeln. Es kommen jedoch auch andere Funktionen des Schienenfahrzeugs 1 in Frage. So kann der Rechner 4 beispielsweise dazu ausgebildet sein, Zustände von Türen des Schienenfahrzeugs 1 zu überwachen und die Türen gegebenenfalls zu öffnen oder zu schließen. Der Rechner 4 kann jedoch auch beispielsweise dazu ausgebildet sein, die Signalanlage 3 und/oder die Weiche 2 zu steuern. Der Rechner 4 kann allgemein dazu ausgebildet sein, ein Stellwerk anzusteuern. Das Stellwerk kann als sicherheitskritisches technisches Element zusammen mit Elementen zum Ausführen von Funktionen des Schienenfahrzeugs 1 in die Bahnsteuerung integriert sein. Im Allgemeinen kann der Rechner 4 dazu ausgebildet sein, beliebige schienenfahrzeugseitige Funktionen und/oder streckenseitige Funktionen von Außenanlagen zu steuern.

Auf dem Rechner 4 ist eine Software hinterlegt bzw. installiert. Durch Ausführen der Software auf dem Rechner 4 kann die Bahnsteuerung angesteuert werden. Die Software weist eine softwarespezifische Identifikationsnummer auf. Der Rechner 4 ist dazu ausgebildet, die softwarespezifische Identifikationsnummer auszulesen und sie zu verwenden. Ferner ist auf dem Rechner 4 eine rechnerspezifische Identifikationsnummer hinterlegt.

Die Software ist zumindest teilweise verschlüsselt auf dem Rechner 4 hinterlegt. Beispielsweise kann der verschlüsselte Teil der Software zumindest jene Bestandteile der Software umfassen, die zur Steuerung der Bahnsteuerung für einen Zugriff auf zumindest einen Ausgang und/oder zumindest eine Kommunikationsschnittstelle des Rechners 4 mit der Bahnsteuerung vorgesehen sind. Die für den Zugriff auf zumindest einen Ausgang und/oder zumindest eine Kommunikationsschnittstelle des Rechners 4 mit dem technischen System vorgesehenen Bestandteile der Software können dabei separat von anderen Bestandteilen der Software auf dem Rechner 4 hinterlegt sein.

FIG 2 zeigt schematisch den Rechner 4 und verdeutlicht beispielhaft, wie Bestandteile der Software auf dem Rechner 4 hinterlegt sein können. Das Hinterlegen der Software kann jedoch auch anders als in FIG 2 dargestellt erfolgen.

Der Rechner 4 weist einen Speicher 6 auf. In dem Speicher 6 sind Bestandteile der Software als ausführbare Dateien 7 hinterlegt. Bei den ausführbaren Dateien 7 kann es sich beispielsweise um .exe-Dateien handeln. Alternativ können die ausführbaren Dateien 7 als sogenannte Binärabzugsblöcke ausgebildet sein. Dabei handelt es sich um ausführbare Dateien 7, die ein für eine spezielle Rechnerplattform, beispielsweise die sogenannte SIMIS-Plattform, vorgeschriebenes Binärformat für austauschbare Datenmodule aufweisen, aus denen das Softwaresystem eines sicheren Rechners 4 zusammengesetzt ist.

In der beispielhaften Ausführungsform umfasst zumindest eine erste ausführbare Datei 8 die zur Steuerung des technischen Systems für den Zugriff auf zumindest einen Ausgang des Rechners 4 vorgesehenen Bestandteile der Software und zumindest eine zweite ausführbare Datei 9 umfasst die zur Steuerung des technischen Systems für den Zugriff auf zumindest eine Kommunikationsschnittstelle des Rechners 4 mit dem technischen System vorgesehenen Bestandteile der Software. In einer alternativen Ausführungsform können die genannten Bestandteile der ersten ausführbaren Datei 8 und der zweiten ausführbaren Datei 9 auch in einer gemeinsamen ausführbaren Datei hinterlegt sein. Die erste ausführbare Datei 8 und die zweite ausführbare Datei 9 bilden ein sogenanntes Startmodul 10. Die im Startmodul 10 enthaltenen ausführbaren Dateien 8, 9 der Software sind verschlüsselt hinterlegt. Sie müssen erfolgreich entschlüsselt werden, damit sie auf dem Rechner 4 ausgeführt werden können.

Neben den ausführbaren Dateien 8, 9 des Startmoduls 10 können auch andere ausführbare Dateien 7 im Speicher 6 hinterlegt sein. Alle ausführbaren Dateien können in einer gemeinsamen Datei 11 zusammengefasst sein. Wenn es sich bei den ausführbaren Dateien 7 um Binärabzugsblöcke handelt, so kann die gemeinsame Datei auch Lade-Datei (LAD-file) bezeichnet werden. Eine Lade-Datei ist für das Basissystem der SIMIS-Rechnerplattformen eine Zusammenfassung von Binärabzugsblöcken.

Zum Ausführen der Software muss der Rechner 4 den verschlüsselten Teil der Software, beispielsweise den im Startmodul 10 enthaltenen Teil gemäß FIG 2, entschlüsseln. Dies erfolgt unter Verwendung eines sogenannten Anlaufsiegels. Der Rechner 4 ist dazu vorgesehen, das Anlaufsiegel über eine Schnittstelle mit einem weiteren Rechner 12 anzufragen und zu empfangen. Das Anlaufsiegel umfasst einen verknüpften Wert aus Werten eines Schlüssels und einer softwarespezifischen Identifikationsnummer und einer rechnerspezifischen Identifikationsnummer. Das Anlaufsiegel wird im Rahmen eines computerimplementierten Verfahrens von dem weiteren Rechner 12 generiert.

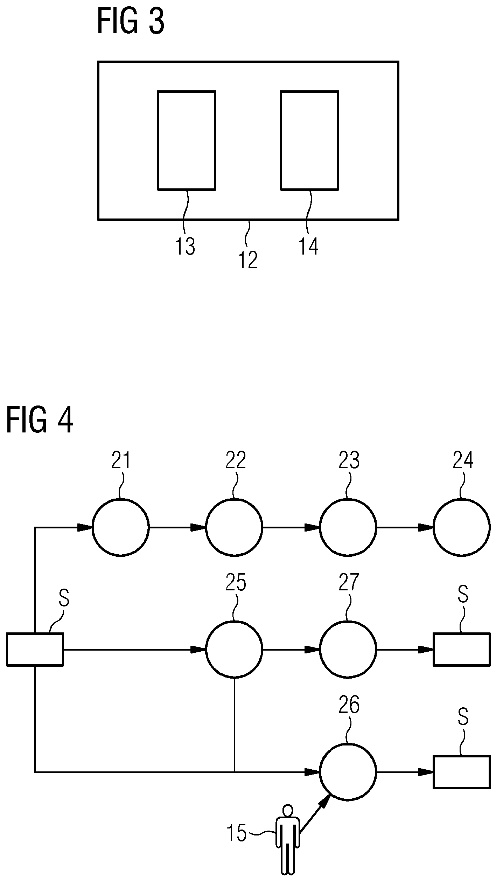

FIG 3 zeigt schematisch den weiteren Rechner 12. Der weitere Rechner 12 umfasst Mittel 13 zum Generieren des Anlaufsiegels und Mittel 14 zur Ausgabe des Anlaufsiegels an den Rechner 4. Der weitere Rechner 12 ist dazu ausgebildet, den verknüpften Wert aus Werten des Schlüssels und der softwarespezifischen Identifikationsnummer der Software und der rechnerspezifischen Identifikationsnummer als einen Bestandteil des Anlaufsiegels zu erstellen. Der Schlüssel ist dabei zum Entschlüsseln des zumindest einen verschlüsselten Teils der Software vorgesehen. Das Anlaufsiegel kann zusätzlich eine Vorschrift aufweisen, nach der das Entschlüsseln mittels des Schlüssels erfolgen soll. Das Verschlüsseln erfolgt auf Basis des Schlüssels und einer Operation. Die optional im Anlaufsiegel enthaltene Vorschrift entspricht also einer inversen Operation. Alternativ kann die Vorschrift auch auf dem Rechner 4 hinterlegt sein.

Der Rechner 4 ist dazu ausgebildet, den Schlüssel durch Verwenden der softwarespezifischen Identifikationsnummer der auf dem Rechner hinterlegten Software und/oder der auf dem Rechner hinterlegten rechnerspezifischen Identifikationsnummer aus dem verknüpften Wert des Anlaufsiegels zu extrahieren und den verschlüsselten Teil der Software auf Basis des extrahierten Schlüssels zu entschlüsseln. Der Rechner 4 ist dazu ausgebildet, den entschlüsselten Teil der Software für die Bahnsteuerung zu benutzen, wenn das Entschlüsseln erfolgreich war.

FIG 4 zeigt schematisch Verfahrensschritte des computerimplementierten Verfahrens 20 zum Ausführen der Software auf dem Rechner 4.

Nach einer Installation der Software auf dem Rechner 4, die im Rahmen eines Updates auf dem Rechner 4 installiert wurde, und einem optionalen Start oder Neustart des Rechners 4 wird in einem ersten Verfahrensschritt 21 ein Anlaufsiegel verwendet. Ein vor der Installation der Software auf dem Rechner 4 hinterlegtes Anlaufsiegel kann beispielsweise vom Rechner 4 als ungültig gekennzeichnet und im Rahmen des Verfahrens nicht mehr verwendet werden. Sollte nach der Installation der Software noch kein gültiges Anlaufsiegel auf dem Rechner 4 hinterlegt worden sein, so kann das Anlaufsiegel in einem sechsten Verfahrensschritt 26 vom Rechner 4 angefragt, vom weiteren Rechner 12 ausgegeben und vom Rechner 4 empfangen und auf dem Rechner 4 hinterlegt werden, um im ersten Verfahrensschritt 21 verwendet zu werden.

Das Anlaufsiegel umfasst den verknüpften Wert aus den Werten des Schlüssels und der softwarespezifischen Identifikationsnummer und der rechnerspezifischen Identifikationsnummer. Der Schlüssel kann beispielsweise 512 Bits lang sein. Der Schlüssel kann für alle Softwareversionen und für alle Rechner 4 gleich sein und nicht verändert werden. Es können jedoch auch verschiedene Schlüssel für verschiedene Softwareversionen und/oder Rechner 4 verwendet werden. Optional umfasst das Anlaufsiegel zusätzlich die Vorschrift zum Entschlüsseln des verschlüsselten Teils der Software bzw. des Startmoduls 10. Die Vorschrift kann alternativ auch auf dem Rechner 4 hinterlegt worden sein, ohne Bestandteil des Anlaufsiegels zu sein.

In einem zweiten Verfahrensschritt 22 erfolgt das Extrahieren des Schlüssels des Anlaufsiegels durch Verwenden der softwarespezifischen Identifikationsnummer der auf dem Rechner 4 hinterlegten Software und der auf dem Rechner 4 hinterlegten rechnerspezifischen Identifikationsnummer. Die einzelnen Werte und insbesondere der Schlüssel können aus dem verknüpften Wert gewonnen werden, indem eine Rücktransformation der Verknüpfung auf Basis der softwarespezifischen Identifikationsnummer der auf dem Rechner 4 hinterlegten Software und der auf dem Rechner 4 hinterlegten rechnerspezifischen Identifikationsnummer erfolgt.

In einem dritten Verfahrensschritt 23 wird der verschlüsselte Teil der Software auf Basis des extrahierten Schlüssels entschlüsselt. In einem vierten Verfahrensschritt 24 wird der entschlüsselte Teil der Software für eine Steuerung des technischen Systems also der Bahnsteuerung benutzt, wenn das Entschlüsseln erfolgreich war. Ist die Freigabe der Software durch das Entschlüsseln erfolgt, so befindet sich der Rechner in einem betriebssicheren Zustand. Dadurch kann sichergestellt werden, dass die Bahnsteuerung ordnungsgemäß und auf sichere Art und Weise betrieben wird. Nur, wen das Entschlüsseln erfolgreich ist, ist die Software überhaupt lauffähig und die Bahnsteuerung kann in den sicherungstechnischen Betrieb gehen. Sollte dieser Schritt nicht erfolgreich durchlaufen werden, bleibt der Rechner 4 im sicheren Zustand, da beispielsweise keine Ausgänge bedient werden können und/oder keine Kommunikation mit der Bahnsteuerung aufgebaut werden kann.

Wird der verknüpfte Wert des Anlaufsiegels sowohl auf Basis des Werts der softwarespezifischen Identifikationsnummer als auch auf Basis des Werts der rechnerspezifischen Identifikationsnummer erzeugt, so kann sichergestellt werden, dass die korrekte Software auf dem korrekten Rechner 4 ausgeführt wird. Alternativ kann auch nur eine der Identifikationsnummern zum Erzeugen des Anlaufsiegels und zum Entschlüsseln eines Teils der Software, etwa dem Startmodul, verwendet werden. In diesem Fall kann sichergestellt werden, dass die korrekte Software auf einem Rechner 4 ausgeführt wird, oder, dass die Software auf dem korrekten Rechner 4 ausgeführt wird.

Optional kann nach dem Entschlüsseln zusätzlich geprüft werden, ob die Software verfälscht oder manipuliert wurde. Eine Freigabe der Software zum Benutzen des entschlüsselten Teils der Software für eine Steuerung des technischen Systems erfolgt in diesem Fall lediglich dann, wenn keine Verfälschung oder Manipulation identifiziert werden konnte.

Sollte das Entschlüsseln nicht erfolgreich sein, kann in einem optionalen sechsten Verfahrensschritt 26 ein gültiges Anlaufsiegel angefragt werden. Das Anlaufsiegel kann vom Rechner 4 beispielsweise bei einem Bedienpersonal 15 angefragt werden, der die Software für den Betrieb des technischen Systems freigegeben soll. Das Bedienpersonal 15 kann hierzu auf eine abgesetzte Datenbank zugreifen, um aus dem Schlüssel der softwarespezifischen und der rechnerspezifischen Identifikationsnummer und optional der Vorschrift das Anlaufsiegel zu konstruieren, wodurch eine Freigabe für den Betrieb der Software und des betreffenden zur Steuerung des technischen Systems ausgebildeten Rechners 4 erfolgt. Alternativ zum Bedienpersonal 15 kann auch zumindest teilweise ein computerimplementiertes System zum Freigeben des Anlaufsiegels verwendet werden. FIG 4 zeigt lediglich beispielhaft das Bedienpersonal 15, wobei lediglich verdeutlicht wird, dass das Bedienpersonal 15 im Zuge der Anfrage des Anlaufsiegels am Verfahren 20 beteiligt sein kann.

Zusätzlich kann beispielsweise vor dem Anfragen des gültigen Anlaufsiegels in einem optionalen fünften Verfahrensschritt 25 geprüft werden, ob ein Softwareupdate verfügbar ist. Ist ein Softwareupdate verfügbar, so ist die auf dem Rechner 4 hinterlegte bzw. installierte Software bzw. Softwareversion nicht mehr gültig und muss ersetzt werden. In diesem Fall wurde also zunächst ein ungültiges Anlaufsiegel auf dem Rechner 4 hinterlegt, da die Softwareversion bereits veraltet war. Ist hingegen kein Softwareupdate verfügbar, kann das Anlaufsiegel für die bereits auf dem Rechner 4 hinterlegte Software erneut angefragt werden.

Sollte ein Softwareupdate verfügbar sein, wird das Softwareupdate in einem optionalen siebten Verfahrensschritt 27 vom Rechner 4 empfangen und auf dem Rechner 4 installiert und das Anlaufsiegel zum Softwareupdate, also zu einer neuen Version der Software oder einer neuen Software, angefragt. Ein angefragtes Anlaufsiegel wird vom weiteren Rechner 12 ausgegeben, vom Rechner 4 empfangen und auf dem Rechner 4 hinterlegt. Nach dem sechsten und/oder nach dem siebten Verfahrensschritt 26, 27 kann optional ein Neustart des Rechners 4 durchgeführt werden.

Bei einer Variante kann das Verfahren 20 nach jedem Start oder Neustart des Rechners 4 durchgeführt werden. Hierbei wird also eine Information darüber, ob ein Entschlüsseln bereits erfolgreich war oder nicht, nicht auf dem Rechner 4 hinterlegt. Dadurch verbleibt der Rechner 4 und das technische System nach jedem Start oder Neustart in einem sicheren Zustand, bis das Entschlüsseln erfolgreich war.

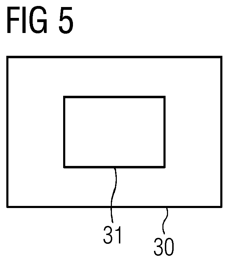

FIG 5 zeigt ein Computerprogrammprodukt 30 umfassend Befehle 31, die bei der Ausführung durch den Rechner 4 diesen dazu veranlassen, das Verfahren 20 gemäß FIG 4 durchzuführen.

## Patentansprüche

1. Computerimplementiertes Verfahren (20) zum Ausführen einer Software auf einem Rechner (4) für eine Steuerung eines technischen Systems mit folgenden Verfahrensschritten:
- Empfangen eines Anlaufsiegels, wobei das Anlaufsiegel einen verknüpften Wert aus Werten eines Schlüssels und einer rechnerspezifischen Identifikationsnummer umfasst,
- Extrahieren des Schlüssels des Anlaufsiegels durch Verwenden einer auf dem Rechner (4) hinterlegten rechnerspezifischen Identifikationsnummer,
- Entschlüsseln zumindest eines verschlüsselten Teils der Software auf Basis des extrahierten Schlüssels,
- Benutzen des entschlüsselten Teils der Software für eine Steuerung des technischen Systems,
**dadurch gekennzeichnet, dass**
geprüft wird, ob ein Softwareupdate verfügbar ist, wobei, wenn ein Softwareupdate verfügbar ist, ein Anlaufsiegel für das Softwareupdate angefragt wird und das Softwareupdate vom Rechner (4) empfangen und auf dem Rechner (4) installiert wird, mit folgenden Verfahrensschritten:
- Verwenden dieses Anlaufsiegels,
wobei dieses Anlaufsiegel einen verknüpften Wert aus Werten eines Schlüssels und einer softwarespezifischen Identifikationsnummer und einer rechnerspezifischen Identifikationsnummer umfasst,
- Extrahieren des Schlüssels dieses Anlaufsiegels durch Verwenden der softwarespezifischen Identifikationsnummer einer auf dem Rechner (4) hinterlegten Software und der auf dem Rechner (4) hinterlegten rechnerspezifischen Identifikationsnummer,
- Entschlüsseln zumindest eines verschlüsselten Teils der Software auf Basis des extrahierten Schlüssels,
- Benutzen des entschlüsselten Teils der Software für eine Steuerung des technischen Systems.

2. Verfahren (20) gemäß Anspruch 1,
wobei der verschlüsselte Teil der Software zumindest jene Bestandteile der Software umfasst, die zur Steuerung des technischen Systems für einen Zugriff auf zumindest einen Ausgang oder zumindest eine Kommunikationsschnittstelle des Rechners (4) mit dem technischen System vorgesehen sind.

3. Verfahren (20) gemäß Anspruch 1 oder 2,
wobei das Anlaufsiegel zusätzlich eine Vorschrift aufweist, wobei das Entschlüsseln auf Basis des extrahierten Schlüssels und der Vorschrift erfolgt.

4. Verfahren (20) gemäß einem der vorhergehenden Ansprüche, wobei, wenn das Entschlüsseln nicht erfolgreich war, ein gültiges Anlaufsiegel angefragt wird.

5. Verfahren (20) gemäß einem der vorhergehenden Ansprüche, wobei das Verfahren (20) nach jedem Start oder Neustart des Rechners (4) durchgeführt wird.

6. Computerprogrammprodukt (30),
umfassend Befehle (31), die, wenn sie auf einem Rechner (4) ausgeführt werden, alle Verfahrensschritte eines der Verfahren (20) gemäß einem der Ansprüche 1 bis 3 anwenden.

7. Rechner (4) zur Steuerung eines technischen Systems,
wobei der Rechner (4) dazu eingerichtet ist, ein Anlaufsiegel zu empfangen,
wobei das Anlaufsiegel einen verknüpften Wert aus Werten eines Schlüssels und einer softwarespezifischen Identifikationsnummer und einer rechnerspezifischen Identifikationsnummer umfasst,
wobei der Rechner (4) dazu eingerichtet ist, den Schlüssel durch Verwenden einer auf dem Rechner (4) hinterlegten rechnerspezifischen Identifikationsnummer aus dem verknüpften Wert des Anlaufsiegels zu extrahieren und zumindest einen verschlüsselten Teil der Software auf Basis des extrahierten Schlüssels zu entschlüsseln,
wobei der Rechner (4) dazu eingerichtet ist, den entschlüsselten Teil der Software für eine Steuerung des technischen Systems auszuführen, wenn das Entschlüsseln erfolgreich war
wobei der Rechner (4) dazu eingerichtet ist, zu prüfen, ob ein Softwareupdate verfügbar ist,
wobei, wenn ein Softwareupdate verfügbar ist, der Rechner (4) dazu eingerichtet ist, ein Anlaufsiegel für das Softwareupdate anzufragen und das Softwareupdate zu empfangen und auf dem Rechner (4) unter Ausführung der Verfahrensschritte des Anspruchs 1 zu installieren.

8. Rechner (4) gemäß Anspruch 7,
wobei der verschlüsselte Teil der Software zumindest jene Bestandteile der Software umfasst, die zur Steuerung des technischen Systems für einen Zugriff auf zumindest einen Ausgang oder zumindest eine Kommunikationsschnittstelle des Rechners (4) mit dem technischen System vorgesehen sind.

9. Rechner (4) gemäß Anspruch 8,
wobei die für einen Zugriff auf zumindest einen Ausgang oder zumindest eine Kommunikationsschnittstelle des Rechners (4) mit dem technischen System vorgesehenen Bestandteile der Software separat von anderen Bestandteilen der Software auf dem Rechner (4) hinterlegt sind.

10. Rechner (4) gemäß einem der vorhergehenden Ansprüche 7 bis 9,
wobei der Rechner (4) dazu ausgebildet ist, eine Funktion eines Schienenfahrzeuges (1) auf Basis des freigegebenen Teils der Software zu steuern.

11. Rechner (4) gemäß einem der vorhergehenden Ansprüche 7 bis 10,
wobei der Rechner (4) dazu ausgebildet ist, eine Signalanlage (3) für Schienenfahrzeuge (1) oder ein Weiche (2) zu steuern.

## Claims

1. Computer-implemented method (20) for running a piece of software on a computer (4) for control of a technical system with the following method steps:
- receiving a start-up seal,
wherein the start-up seal comprises a linked value consisting of values of a key and a computer-specific identification number,
- extracting the key of the start-up seal by using a computer-specific identification number stored on the computer (4),
- decrypting at least one encrypted part of the software on the basis of the extracted key,
- using the decrypted part of the software for control of the technical system,
**characterised in that**
it is checked whether a software update is available, wherein, if a software update is available, a start-up seal for the software update is requested and the software update is received by the computer (4) and installed on the computer (4), with the following method steps:
- using said start-up seal,
wherein this start-up seal comprises a linked value consisting of values of a key and a software-specific identification number and a computer-specific identification number,
- extracting the key of said start-up seal by using the software-specific identification number of a piece of software stored on the computer (4) and the computer-specific identification number stored on the computer (4),
- decrypting at least one encrypted part of the software on the basis of the extracted key,
- using the decrypted part of the software for control of the technical system.

2. Method (20) according to claim 1,
wherein the encrypted part of the software comprises at least the constituent parts of the software which are provided for control of the technical system for access to at least one output or at least one communication interface of the computer (4) with the technical system.

3. Method (20) according to claim 1 or 2,
wherein the start-up seal additionally has a rule, wherein the decryption takes place on the basis of the extracted key and the rule.

4. Method (20) according to one of the preceding claims,
wherein, if the decryption was not successful, then a valid start-up seal is requested.

5. Method (20) according to one of the preceding claims,
wherein the method (20) is performed after each start-up or restart of the computer (4).

6. Computer program product (30),
comprising commands (31) which, when they are carried out on a computer (4), apply all method steps of one of the methods (20) according to one of claims 1 to 3.

7. Computer (4) for control of a technical system,
wherein the computer (4) is configured to receive a start-up seal,
wherein the start-up seal comprises a linked value consisting of values of a key and a software-specific identification number and a computer-specific identification number,
wherein the computer (4) is configured to extract the key, by using a computer-specific identification number stored on the computer (4), from the linked value of the start-up seal and to decrypt at least one encrypted part of the software on the basis of the extracted key,
wherein the computer (4) is configured to run the decrypted part of the software for control of the technical system, if the decryption was successful,
wherein the computer (4) is configured to check whether a software update is available,
wherein, if a software update is available, the computer (4) is configured to request a start-up seal for the software update and to receive the software update and to install it on the computer (4) while carrying out the method steps of claim 1.

8. Computer (4) according to claim 7,
wherein the encrypted part of the software comprises at least the constituent parts of the software which are provided for control of the technical system for access to at least one output or at least one communication interface of the computer (4) with the technical system.

9. Computer (4) according to claim 8,
wherein the constituent parts of the software that are provided for access to at least one output or at least one communication interface of the computer (4) with the technical system are stored separately from other constituent parts of the software on the computer (4).

10. Computer (4) according to one of the preceding claims 7 to 9,
wherein the computer (4) is embodied to control a function of a rail vehicle (1) on the basis of the released part of the software.

11. Computer (4) according to one of the preceding claims 7 to 10,
wherein the computer (4) is embodied to control a signal installation (3) for rail vehicles (1) or a set of points (2).

## Revendications

1. Procédé (20) mis en œuvre par ordinateur d'exécution d'un logiciel sur un ordinateur (4) pour une commande d'un système technique comprenant les stades de procédé suivants :
- réception d'un sceau de démarrage,
dans lequel le sceau de démarrage comprend une valeur combinée composée de valeurs d'une clé et d'un numéro d'identification spécifique à l'ordinateur,
- extraction de la clé du sceau de démarrage par utilisation d'un numéro d'identification spécifique à l'ordinateur mis en mémoire sur l'ordinateur (4),
- déchiffrement d'au moins une partie chiffrée du logiciel sur la base de la clé extraite,
- utilisation de la partie déchiffrée du logiciel pour une commande du système technique,
**caractérisé en ce que**
on contrôle si une mise à jour du logiciel est disponible, dans lequel, si une mise à jour du logiciel est disponible, on demande un sceau de démarrage pour la mise à jour du logiciel et on reçoit la mise à jour du logiciel de l'ordinateur (4) et on l'installe sur l'ordinateur (4), comprenant les stades de procédé suivants :
- utilisation de ce sceau de démarrage,
dans lequel ce sceau de démarrage comprend une valeur combinée composée de valeurs d'une clé et d'un numéro d'identification spécifique au logiciel et d'un numéro d'identification spécifique à l'ordinateur,
- extraction de la clé de ce sceau de démarrage par utilisation du numéro d'identification spécifique au logiciel d'un logiciel mis en mémoire sur l'ordinateur (4) et du numéro d'identification spécifique à l'ordinateur mis en mémoire sur l'ordinateur (4),
- déchiffrement d'au moins une partie chiffrée du logiciel sur la base de la clé extraite,
- utilisation de la partie déchiffrée du logiciel pour une commande de l'installation technique.

2. Procédé (20) suivant la revendication 1,
dans lequel la partie chiffrée du logiciel comprend au moins les parties constitutives du logiciel, qui, pour la commande du système technique, sont prévues pour un accès à au moins une sortie ou au moins une interface de communication de l'ordinateur (4) avec le système technique.

3. Procédé (20) suivant la revendication 1 ou 2,
dans lequel le sceau de démarrage a en outre une règle, dans lequel le déchiffrement s'effectue sur la base de la clé extraite et de la règle.

4. Procédé (20) suivant l'une des revendications précédentes, dans lequel, si le déchiffrement n'a pas été couronné de succès, on demande un sceau de démarrage valable.

5. Procédé (20) suivant l'une des revendications précédentes, dans lequel on exécute le procédé (20) après chaque démarrage ou redémarrage de l'ordinateur (4).

6. Produit (30) de programme d'ordinateur,
comprenant des instructions (31) qui, lorsqu'elles sont exécutées sur un ordinateur (4), appliquent tous les stades de l'un des procédés (20) suivant l'une des revendications 1 à 3.

7. Ordinateur (4) de commande d'un système technique,
dans lequel l'ordinateur (4) est agencé pour recevoir un sceau de démarrage,
dans lequel le sceau de démarrage comprend une valeur combinée composée de valeurs d'une clé et d'un numéro d'identification spécifique au logiciel et d'un numéro d'identification spécifique à l'ordinateur,
dans lequel l'ordinateur (4) est agencé pour extraire de la valeur combinée du sceau de démarrage la clé, en utilisant un numéro d'identification spécifique à l'ordinateur mis en mémoire sur l'ordinateur (4) et pour déchiffrer au moins une partie chiffrée du logiciel sur la base de la clé extraite,
dans lequel l'ordinateur (4) est agencé pour exécuter la partie déchiffrée du logiciel pour une commande du système technique, si le déchiffrement a été couronné de succès,
dans lequel l'ordinateur (4) est agencé pour contrôler si une mise à jour de logiciel est disponible,
dans lequel, si une mise à jour de logiciel est disponible, l'ordinateur (4) est agencé pour demander un sceau de démarrage pour la mise à jour de logiciel et pour recevoir la mise à jour de logiciel et l'installer sur l'ordinateur (4) en exécutant les stades du procédé suivant la revendication 1.

8. Ordinateur (4) suivant la revendication 7,
dans lequel la partie chiffrée du logiciel comprend au moins les parties constitutives du logiciel, qui, pour la commande du système technique, sont prévues pour un accès à au moins une sortie ou au moins une interface de communication de l'ordinateur (4) avec le système technique.

9. Ordinateur (4) suivant la revendication 8,
dans lequel les parties constitutives du logiciel, prévues pour un accès à au moins une sortie ou à au moins une interface de communication de l'ordinateur (4) avec le système technique, sont mises en mémoire séparément d'autres parties constitutives du logiciel sur l'ordinateur (4).

10. Ordinateur (4) suivant l'une des revendications 7 à 9 précédentes,
dans lequel l'ordinateur (4) est constitué pour commander une fonction d'un véhicule (1) ferroviaire sur la base de la base de la partie libérée du logiciel.

11. Ordinateur (4) suivant l'une des revendications 7 à 10 précédentes,
dans lequel l'ordinateur (4) est constitué pour commander une installation (3) de signal pour des véhicules (1) ferroviaires ou un aiguillage (2).
